(19)

Europäisches
Patentamt
European
Patent Office
Office européen
des brevets

(11)  **EP 4 012 625 A1**

(12)  **EUROPEAN PATENT APPLICATION**

(43) Date of publication:
**15.06.2022   Bulletin 2022/24**

(21) Application number: **20306518.0**

(22) Date of filing: **09.12.2020**

(51) International Patent Classification (IPC):
**G06N 3/08** *(2006.01)*

(52) Cooperative Patent Classification (CPC):
**G06N 3/0454; G06N 3/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Commissariat à l'Energie Atomique et
aux Energies
Alternatives
75015 Paris (FR)**

(72) Inventors:
• **SAWAGUCHI, Sota**
  **38054 Grenoble Cedex 09 (FR)**
• **CHRISTMANN, Jean-Frédéric**
  **38054 Grenoble Cedex 09 (FR)**
• **LESECQ, Suzanne**
  **38054 Grenoble Cedex 09 (FR)**

(74) Representative: **Marks & Clerk France
Immeuble "Visium"
22, avenue Aristide Briand
94117 Arcueil Cedex (FR)**

(54)  **METHOD AND SYSTEM FOR CONTROLLING ENERGY CONSUMING OPERATIONS**

(57)    A lightweight Learning mechanism combining a linear function approximation based Reinforcement Learning and an adaptive learning rate method is provided for energy management of Internet of Things (IoT) nodes and other energy constrained electrical systems, especially for nodes with harvested energy and wireless transmitters. The adaptive learning rate method may be based on an exponentially weighted moving average (EWMA), or Adam, which incorporated EWMA. Optimal decay coefficient ranges outside the usual range in Neural Network contexts have been found to be effective in implementations based on this linear function approach.

FIG.9

EP 4 012 625 A1

**Description**

The invention relates to energy management of energy constrained electronic systems, for example Internet of Things (IoT) nodes, possibly depending on harvested energy for their power supply.

An IoT sensor node typically has sensor(s), processing unit(s), and a radio transmitter. It has a power supply, possibly recharged with an energy-harvester. The node surroundings, such as service provider, weather and objects around the node are uncertain and they impact the sensor node behaviour. These uncertainties are sometimes called "disturbances". In practice, no prior information about these uncertainties is available, and when these uncertainties are estimated, the estimate is usually poor, i.e., far from actual events as they transpire. Thus, in this domain, several technical problems must be faced. They may be related among other factors to data and energy uncertainty, workload variations, wireless link quality variations, and the unpredictability of harvested and consumed energy. For the convenience of the reader, a table of common abbreviations as used throughout the following description is provided at the end of the detailed description.

It will be appreciated that similar uncertainties may occur in the management of other energy consuming operations of electronic systems.

A number of mechanisms have been proposed for managing these factors.

Reinforcement Learning (RL) is known as one of the most effective methods to deal with the uncertainties with no a priori information. It also possesses adaptability to the environmental changes by constant online exploration and learning. Meanwhile, for control purposes, it does not require an analytic model of the system to be controlled, as do classical control techniques such as Proportional-Integral-Derivative (PID)-based, Model Predictive Control (MPC)-based, etc. It may be noted that in Reinforcement Learning a set of variables that reflects the environment is referred to as the state, and each user decides which variables to use for the state representation. A number of implementations based on such technologies are known.

A known reinforcement learning mechanism is the Actor-Critic model.

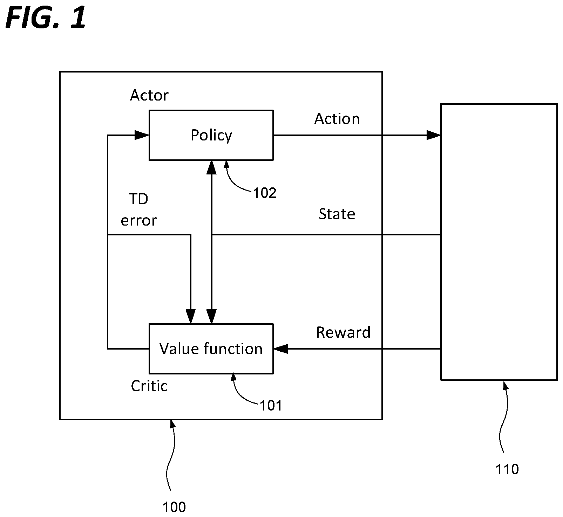

Figure 1 illustrates the actor-critic reinforcement learning model.

As shown in figure 1, the actor-critic model is based on the provision of two interacting models: Actor 102 and Critic 101. The Actor receives information concerning the state of the outside world 110, and on the basis of a learned policy, performs an Action with respect to the outside world. Meanwhile, the Critic 101 also receives the same information concerning the state of the outside world 110, and based on defined objectives, evaluates whether things have gone better or worse. The learned policy implemented by the actor and the value function provided by the critic may be defined by respective neural networks. The two networks are trained separately using a gradient ascent approach aiming, for each network, to iteratively move towards the best performing model, with updates to the weight values defining the models being performed at each iteration, on the basis of a TD error value output by the Critic.

The article by Masadeh, Z. Wang, and A. E. Kamal, entitled "An actor-critic reinforcement learning approach for energy harvesting communications systems," published in 2019 28th International Conference on Computer Communication and Networks (ICCCN), pp. 1-6, July 2019, presents an actor-critic Reinforcement Learning method for transmission (TX) output power control in energy-harvesting point-to-point communication systems. The actor learns the parameters for the mean and standard deviation of a normal distribution, while the critic is constructed by a two-layer neural network, which is costly for the resource-constrained devices. The control interval is 1 second, and an infinite data buffer is assumed.

A feed-forward mechanism is proposed in the article by C. Qiu, Y. Hu, Y. Chen, and B. Zeng, entitled "Deep Deterministic Policy Gradient (DDPG)-based energy harvesting wireless communications," IEEE Internet of Things Journal, vol. 6, pp. 8577-8588, Oct 2019. This method is based on an actor-critic method where a policy gradient and the concept of Deep Q-Network are combined.

Another feed-forward mechanism is proposed in the article by N. Zhao, Y. Liang, D. Niyato, Y. Pei, and Y. Jiang, entitled "Deep reinforcement learning for user association and resource allocation in heterogeneous networks," in 2018 IEEE Global Communications Conference (GLOBE-COM), pp. 1-6, Dec 2018. They make use of Double Deep Q-Network, which is costly for resource-constrained devices.

Storing learned parameters and carrying out computations, e.g., multiply-and-accumulate (MAC) operations come at a cost. Table 1 below shows the required number of memory spaces and computations for the feed-forward operation on the basis of certain feed forward mechanisms. The parameters are updated, in general, by a back propagation algorithm.

**Table 1: Computation and memory cost of neural nets (feed-forward)**

| Paper | RL Type | # of MACs | Memory |
|---|---|---|---|
| C. Qiu, Y. Hu, Y. Chen, and B. Zeng | Actor-critic | 33.90K | 17.10K |

(continued)

| Paper | RL Type | # of MACs | Memory |
|---|---|---|---|
| N. Zhao, Y. Liang, D. Niyato, Y. Pei, and Y. Jiang | DQN | 12.86K | 6.43K |
| Masadeh, Z. Wang, and A. E. Kamal | Actor-critic | 170 | 85 |

In the article by S. Sawaguchi et al., entitled "Multi-agent actor-critic method for joint duty-cycle and transmission power control," in Design, Automation Test in Europe Conference (DATE) 2020, March 2020, a multi-agent actor-critic algorithm for joint TX duty-cycle and output power optimization is proposed. The observation of the State-of-Buffer (SoB) and the State-of-Charge (SoC) for data and energy management is described. Such an observation reduces the input cost and increases the scalability of the output.

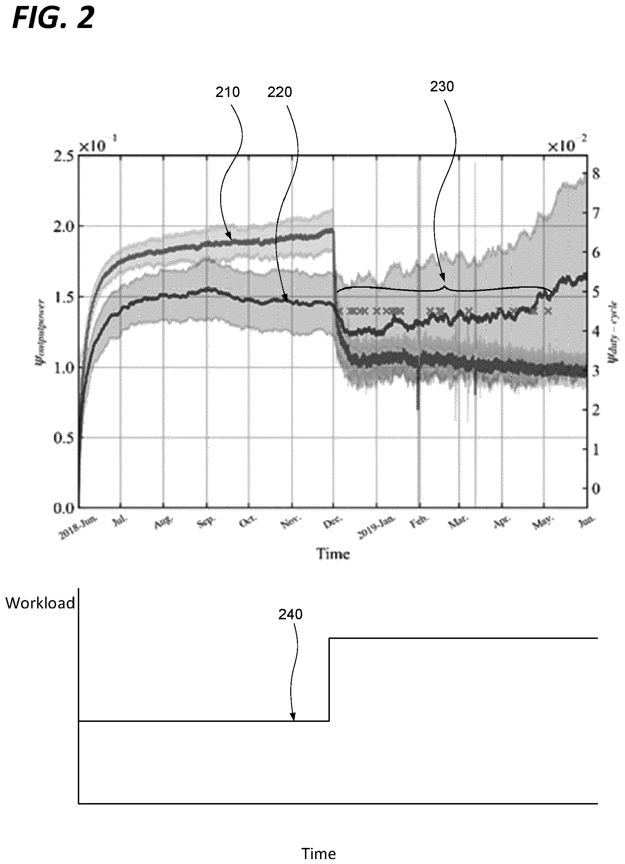

Figure 2 presents simulated results achievable by the application of this prior art approach. A first line 210 plots the evolution of the actor parameter $\psi_{op}$ (no unit) for the output power over a one year simulation period, while the second line 220 plots the evolution of the actor parameter $\psi_{dc}$ (no unit) for the duty cycle over the same period. Note that the actor parameter is used to generate the associated action of the Actor. A separate set of axes with the same time axis represents the evolution of the workload 240 over the simulation period. This simulation assumes the following operating conditions:

- The control update is applied every 30 minutes.
- A photovoltaic cell is used for the energy-harvesting. Real-life solar irradiance data are provided by Oak Ridge National Laboratory https://midcdmz.nrel.gov/apps/sitehome.pl?site=ORNL.
- The self-discharge of a supercapacitor (20% per day) is considered.
- The wireless link quality is under the influence of path-loss and shadowing.
- The workload follows the Poisson distribution. The average rate doubles up after the first 6 months (where the algorithm will be put through the test regarding fast adaptability/reactivity). More precisely, the system receives the average of 1.0 pkts/min for the first 6 months, and it impulsively becomes twice (2.0 pkts/min) afterwards.

Results as shown in figure 2 reflect the average of 87 successful cases out of 100. Unsuccessful cases represented by a cross indicate at least one system failure (for example, a power failure due to the system running out of energy, i.e. the stored energy level falls below a certain threshold where the system is no longer able to operate. In other systems, other failure modes may be envisaged, for example where data is lost due for example to a buffer overflow or the like.), occurring due to a large variance of gradients provoked by the sudden change of workload. It may be noted that only the time value of each cross on the horizontal axis is meaningful, but not the vertical position. As can be seen, the system failure occurs only after the workload change. Despite the fact that the learning rates work well for the first workload scenario, they are fixed, and therefore, they cannot be adapted to the new situation, giving rise to large gradient fluctuations, and some system failures. In particular, when the workload strongly increases, the prior art is not able to cope with the new situation because it cannot be properly tuned.

The applied hyper-parameters of the Actor-Critic are listed in **Erreur ! Source du renvoi introuvable.**Table 2 below. They correspond to the learning rates for the Actor $\beta_x$ and for the Critic $\alpha_x$, the forgetting factor $\gamma_x$ for the past reward, the recency weight $\lambda_x$ in the Temporal Difference algorithm and the standard deviation $\sigma_x$ for the policy based on the Gaussian distribution for the exploration space. The subscribe x corresponds respectively to the output power (op) and to the duty cycle (dc).

**Table 2: Hyper-parameter setups for study of fixed learning rate**

| Agent x | $\alpha_x$ | $\beta_x$ | $\gamma_x$ | $\lambda_x$ | $\sigma_x$ |
|---|---|---|---|---|---|
| op | 0.1 | $1\times10^{-5}$ | 0.9 | 0.9 | $1\times10^{-3}$ |
| dc | 0.1 | $1\times10^{-5}$ | 0.9 | 0.9 | $1\times10^{-3}$ |

Meanwhile, a number of patent publications exist in this domain.

WO2020/004972 proposes an artificial intelligence based automatic control. This application presents the limitation of a PID algorithm with a target value (i.e., a set point) and the necessity of a Reinforcement Learning based approach. Environmental change detection is carried out based on a predetermined value, requiring some expert (a priori) knowledge about the control, which can be costly.

CN102958109 describes a self-adaptive energy management mechanism in wireless sensor networks, in particular mentioning Markov Decision Process (MDP) as a solution.

CN109217306 proposes a deep reinforcement learning with self-optimising ability for regional power generation control. The application scenario is specific and the use of neural network requires extensive computational and memory resources.

These prior art approaches have been found not to be entirely satisfactory. They tend to present poor adaptability of reinforcement learning and slow online adaptation. Moreover, when neural nets are used, they are resource hungry in terms of computational workload, memory footprint and mitigation of sparse gradients at the cost of faster convergence/reactivity. It is an objective of the present invention to provide improvements in at least some of these regards.

SUMMARY OF THE INVENTION

In accordance with the present invention in a first aspect there is provided a controller of energy consuming operations in an energy constrained electronic system in a closed loop mode. The controller is adapted to apply a linear function approximation based Actor-Critic Reinforcement Learning algorithm to a set of state parameters comprising an energy resource state of said electronic system and one or more performance parameters of said energy consuming operation, wherein a trade off between said energy resource state on one hand and said performance parameters on the other is inherent to the operation of said electronic system. The Reinforcement Learning algorithm incorporates an adaptive learning rate algorithm serving to mitigate fluctuations in the gradient of said state parameters, and the controller is further adapted to define an output parameter specifying a system operation concordant with said performance requirement subject to said mitigation of fluctuations, wherein there exists a predictable monotonic relationship between said system operation and said energy resource state reflected in said linear function approximation.

In accordance with the present invention in a second aspect there is provided an electronic device comprising an energy resource and an output transducer, and a controller according to the first aspect.

In accordance with the present invention in a third aspect there is provided a method of controlling energy consuming operations in an energy constrained electronic system in a closed loop mode. The method comprises the steps of: applying a linear function approximation based Actor-Critic Reinforcement Learning algorithm to a set of state parameters comprising an energy resource state of said electronic system and one or more performance parameters of said energy consuming operation, wherein a trade off between said energy resource state on one hand and said performance parameters on the other is inherent to the operation of said electronic system. The Reinforcement Learning algorithm incorporates an adaptive learning rate algorithm serving to mitigate fluctuations in the gradient of said state parameters, and the method comprises the further step of defining an output parameter specifying a system operation concordant with optimizing said state parameters subject to said mitigation of fluctuations, wherein there exists a monotonic relationship between said system operation and said energy resource state reflected in said linear function approximation.

In a development of the third aspect, the adaptive learning rate is implemented using the Adam algorithm.

In a development of the third aspect, the adaptive learning rate is implemented using the rmsprop algorithm.

In a development of the third aspect, the adaptive learning rate is implemented using the Adadelta algorithm.

In a development of the third aspect, the first order decay coefficient ($\beta_1$) of the rmsprop algorithm or Adam Algorithm is less than 0.9 and the second order decay coefficient ($\beta_2$) is less than (and $\beta_2$=0.999) .

In a development of the third aspect, the energy consuming operations comprise the transmission of data, said one or more performance parameters include a data buffer level, and said system operation is the transmission of a specified part of the content of the data buffer to which said data buffer level relates.

In a development of the third aspect, the energy consuming operations comprise the wireless transmission of data.

In a development of the third aspect, the performance parameters further include a transmission channel quality indicator.

In a development of the third aspect, the energy consuming operations comprise actuator operations of a mechanical system calculated to cause said mechanical system to maintain or assume a particular orientation, configuration, or attitude in a physical frame of reference.

In a development of the third aspect, the energy resource state reflects the charge level of a battery or super capacitor.

In a development of the third aspect, the charge level of a battery or super capacitor is dependent on energy gleaned from a variable source.

In a development of the third aspect, said variable source is solar energy.

In accordance with the present invention in a fourth aspect, there is provided a program comprising instructions which, when the program is executed by a compute element, cause the compute element to carry out the method of the third aspect.

BRIEF DESCRIPTION OF THE DRAWINGS

The invention will be better understood and its various features and advantages will emerge from the following description of a number of exemplary embodiments provided for illustration purposes only and its appended figures in which:

Figure 1    illustrates the actor-critic reinforcement learning model;
Figure 2    presents simulated results achievable by the application of the prior art approach to the context of the present invention;
Figure 3    shows a method of controlling energy consuming operations in an energy constrained electronic system in a closed loop mode, in accordance with an embodiment;
Figure 4    shows a variant of the method of figure 3;
Figure 5    shows a variant of the method of figure 4;
Figure 6    provides a representation of the actor-critic structure according to certain embodiments;
Figure 7    shows results for a simulation with conventional decay coefficient settings, the transitions of the state parameters corresponding to the actor parameters of the two agents respectively;
Figure 8    shows results for a simulation with reduced decay coefficient settings, the transitions of the state parameters corresponding to the actor parameters of the two agents respectively; and
Figure 9    shows a controller of energy consuming operations in an electronic system in a closed loop mode in accordance with an embodiment.

DETAILED DESCRIPTION OF THE INVENTION

In view of the foregoing discussion, it is proposed to combine a fast online adaptation technique with lightweight reinforcement learning, without recourse to neural nets, as discussed in further detail below.

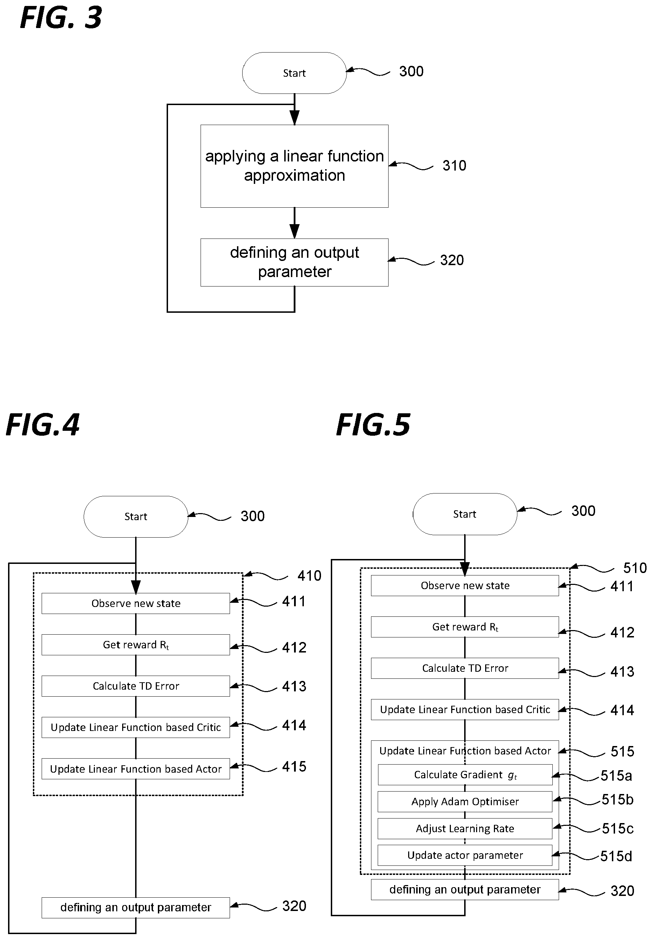

Figure 3 shows a method of controlling energy consuming operations in an energy constrained electronic system in a closed loop mode, in accordance with an embodiment.

As shown in figure 3, the method starts at step 300 before proceeding to step 310 at which a linear function approximation based Actor-Critic Reinforcement Learning algorithm is applied (linear approximations being used both in the Actor and Critic parts of the algorithm) to a set of state parameters comprising an energy resource state of the electronic system and one or more performance parameters of the energy consuming operation. A simple linear relationship may be assumed because the higher the Energy State, the higher level of performance we can afford to provide, while the lower the Performance parameters, the less energy we need to provide. The linear relationship may be bilinear for example, in view of the multiple state parameters under consideration. Generally, a suitable linear approximation may be envisaged sufficiently approximating any physical relation where there exists a monotonic relationship between the system operation and said energy resource state. The values of these state parameters will be associated with respective optimal or preferred values, where the operation of the method of control according to embodiments will tend, over time, to cause the average values of the state parameters to converge with the corresponding optimal or preferred value. A trade off exists between said energy resource state on one hand and the performance parameters on the other, which is inherent to the operation of said electronic system, where the learning process aims to find an optimum balance.

Typically the optimal or preferred value of the energy resource state will correspond to maximum availability of energy, e.g. a full charge, zero voltage drop, etc., and the optimal parameter of the energy consuming operation will be a completion of all pending operations. In certain embodiments, additional parameters with associated optimal or preferred values may be defined, and taken into account together with the energy resource state of said electronic system and a performance parameter of said energy consuming operation as discussed below.

The energy resource state may represent the charge level of a battery, super capacitor or other energy storage device. The charge level of a battery or super capacitor may be dependent on energy gleaned from a variable source, such as solar energy, wind energy, environmental temperature variations, user motion, and the like.

A performance parameter may be affected by operations of an output transducer of the system, such as a transmitter, in which case the performance parameter may describe output data buffer or the like.

Where the energy consuming operations comprise the transmission of data, the performance parameter may be a data buffer level, and the system operation may comprise setting output power or the transmission duty cycle for transmission or otherwise cause the transmission of a specified part of the content of the data buffer to which the data buffer level relates.

Other possible performance parameters may include one or more transmission channel quality indicators. For example, in a system using protocols such as LORA, Wifi, Zigbee and the like, transmission channel quality indicators may include an indication of a confirmation that transmitted data has been received (Acknowledgement signal) and/or a Received Signal Strength Indicator (RSSI) value. The skilled person will recognise that similar or comparable indicators exist in other telecommunication systems.

Monitoring a minimal set of performance parameters reduces the overall complexity of the system, and reinforces the applicability of simple linear or monotonic models.

The energy consuming operations may comprise actuator operations of a mechanical system calculated to cause the mechanical system to maintain or assume a particular orientation, configuration, or attitude in a physical frame of reference.

In accordance with the embodiment, the Reinforcement Learning algorithm incorporates an adaptive learning rate algorithm serving to mitigate fluctuations in the gradient of the state parameters.

Certain adaptive learning rate algorithms that may be adapted to the purposes of the present invention are known in the prior art.

For example, the "Adam" algorithm is a known adaptive learning rate mechanism described in the article by D. Kingma and J. Ba, entitled "Adam: A method for stochastic optimization", 3rd International Conference for Learning Representations, San Diego, 2015. As described, this method is used to ensure the stable convergence of all parameters of the network, i.e., to avoid sparse gradient issues. After the gradient has been computed in the Actor, the Adam algorithm is applied for faster adaptability, and the learning rate is adjusted. However, as discussed below, suitable operating parameters may be selected in view of the objectives of the present invention to make this a suitable algorithm for incorporation in embodiments of the present invention.

Similarly the adaptive learning rate may be implemented using the rmsprop algorithm as described in the article by S. Ruder entitled "An overview of gradient descent optimization algorithms," Computing Research Repository, vol. abs/1609.04747, 2016.

Similarly the adaptive learning rate may be implemented using the Adadelta algorithm as described in the article by S. Ruder entitled "An overview of gradient descent optimization algorithms," Computing Research Repository, vol. abs/1609.04747, 2016.

As described in the respective articles, at least those incorporating an Exponentially Weighted Moving Average (EWMA) approach such as Adam or rmsprop, first and second moment smoothing factors are set at values of 0.9 and 0.999, in view of the underlying aims of ensuring stable convergence. As described below, in accordance with embodiments of the present invention these may be advantageously adapted to provide a more rapid convergence. Generally, sparse gradients in Neural Net systems are resolved by taking into account the long past information (as non-zero gradients are rare and precious, contributing much to the parameter update). Adopting a Reinforcement Learning approach based on a linear function approximation avoids the concerns associated with neural nets, and accordingly frees us from considering sparse gradients.

In particular, the first order decay coefficient ($\beta_1$) of the rmsprop algorithm or Adam algorithm may be less than 0.9 and the second order decay coefficient ($\beta_2$) is less than 0.999. More preferably, the first order decay coefficient ($\beta_1$) of the rmsprop algorithm or Adam algorithm may be between 0.7 and 0.1 and the second order decay coefficient ($\beta_2$) may be between 0.7 and 0.1. More preferably still the first order decay coefficient ($\beta_1$) of the rmsprop algorithm or Adam algorithm may bebelow 0.5, where the initialization bias correction terms can be ignored to further alleviate the computation costs.. This is possible and meaningful in the context of the present invention because a neural network is not used. In conventional implementations based on a Neural Network as described with reference to the prior art, such values would not be suitable.

As shown in figure 3, the method comprises a further step 320 of defining an output parameter specifying a system operation concordant with optimizing said state parameters subject to said mitigation of fluctuations. There will exist a predictable linear relationship between the system operation and the energy resource state reflected in said linear function approximation, for example transmission of data will consume energy. The method then loops back to step 310 for the next iteration.

Where the operation is transmission of data, this may occur by a wireless channel, by modification of one or more operating parameters having an influence of the performance parameter(s) such as, duty cycle, transmission output power level (for wireless), spreading factor (in LORA systems or the like), and any combination of these. Any other output transducer, such as a motor, haptic or audio transducer, light source or laser, and so on may be covered. These may form part of an active input transducer, such as a sonar, lidar, radar device or the like.

A system suitable for a linear function approximation based approaches may generally be expected to have fewer observed state parameters. For example reducing the management of an IoT sensor to managing the Transmission Buffer state and the Energy resource Charge state in the embodiments described in detail below, tending also to decrease the sensing cost.

In accordance with certain embodiments, a lightweight fast online adaptation method is used. For instance, exponentially weighted moving average (EWMA) may be used in workload change detection, as it only incurs two multiplications and one addition. This approach is incorporated in the Adam algorithm as described below but other Reinforcement Learning based algorithms may also be adapted to incorporate this approach in accordance with certain embodiments.

Since the neural nets are removed as well as any direct measurement of external uncertainties for Reinforcement Learning (RL) inputs, the solution will be much more low-cost in terms of computation and memory footprint. Fast and stable online adaptability/reactivity will also be attained thanks to a fast online adaptation technique.

Accordingly, a lightweight Reinforcement Learning (RL) mechanism is proposed that addresses the fast adaptation to any new environmental situation. A linear function approximation based RL is lightweight in terms of computation and memory footprint and advantageously combined with an adaptive learning rate method. As a consequence, compared to the existing solutions, this new approach enables faster adaptability (i.e. both fine-tuning and reactivity) with less computation and memory footprint.

The described approaches thus offer improved adaptability of reinforcement learning with fixed learning rate, faster online adaptation, and avoid recourse to neural nets as generally required in prior art approaches, that, in general, require more computations, memory footprint and mitigation of sparse gradients at the cost of faster convergence/reactivity.

As such, large variance of gradients due to the architecture and application scenarios (e.g., control interval), or to some degree of environmental changes may be handled, and quick adaptation at run-time to a changing environment and low-cost Reinforcement Learning and fast online adaptability may be achieved.

Figure 4 shows a variant of the method of figure 3.

Figure 4 provides in particular additional details concerning the implementation of step 310 of applying a linear function approximation.

In particular, as shown, the method comprises steps 300 and 320 substantially as described above, and a step 410, corresponding substantially to step 310 of figure 3. As shown, step 410 comprises a first sub step 411 of observing a new state. This means obtaining a current value for each of the state parameters. The method then proceeds to step 412 of attributing a reward based on the desirability of the observed conditions, in view of the optimum or preferred value as set out above. The method next proceeds to step 413 of calculating a Temporal Difference Error, for use as the basis of an update to the Actor and Critic parameters. The method then proceeds to step 414 at which the linear Function based Critic is updated, and then to step 415 at which the linear function based Actor is updated. As discussed above, the linear function based Actor may be updated on the basis of the "Adam" algorithm, the rmsprop algorithm, the Adadelta algorithm or otherwise as may occur to the skilled person.

The method then reverts to step 320 as described above.

It will be appreciated that certain of these steps may be performed in alternative sequences without changing the underlying effect. For example, the sequence of steps 414 and 415 may be exchanged.

The Actor-Critic Reinforcement Learning algorithm corresponding to step 310 of figure 3 involves state observation, reward and TD-error calculation, Critic update, Actor update, and action decision steps sequentially.

The skilled person will appreciate that specific functions may be envisaged to implement the steps of figure 4. One more detailed possible implementation of certain steps will now be presented with reference to figure 5.

Figure 5 shows a variant of the method of figure 4.

Figure 5 provides in particular additional details concerning the implementation of step 415 of updating the linear function based actor. In particular, in accordance with figure 5, the Adam algorithm is incorporated in the update of the linear function based Actor.

In particular, as shown, the method comprises steps 300 and 320 substantially as described above, and a step 510, corresponding substantially to step 410 of figure 4. As shown, step 510 comprises sub-steps 411 to 414 corresponding substantially to step 411 to 414 as described above. The method then proceeds to step 515 of updating the linear function based actor. In accordance with the method of figure 5, step 515 comprises the first sub-step 515a of calculating a gradient value for a rate of change of the learning rate. Generally, this gradient may be multiplied by the learning rate to generate the update value for the parameter. The method then proceeds to step 515b, at which the Adam optimiser is applied, for improved adaptability to changes in the observed state. At this stage, the decay coefficients $\beta_1$, $\beta_2$ associated with the Exponentially Weighted Moving Average function incorporated in the Adam optimizer influence the rate of convergence as discussed further below. Finally, at sub-step 515c the learning rate or update value $\beta$ is adjusted based on the calculated gradient and the outputs $m_t$ and $v_t$ of the Adam optimizer, where

$$\beta \cdot g_t \rightarrow \beta \cdot \frac{m_t}{\sqrt{v_t + \varepsilon}}$$

where the domain regularisation value $\varepsilon$ is fixed to avoid computational issues (divide by zero or by something very small) to prevent a gradient or update value explosion in case where $v_t$ hat becomes infinitesimally small. $\varepsilon$ is chosen by the user (tuning parameter). It also depends on the arithmetic used. The obtained values can then be used to update the respective actor parameter or parameters at step 515d,

The method then reverts to step 320 as described above.

It may be noted that although the operations include divisions and squared root determinations, the number of operations is small, and only 9 parameters (7 parameters for Actor and Critic, and two for EWMA in Adam) need to be stored for each agent (i.e., each action). Compared to prior art approaches, the computation and memory cost of this implementation are likely to be smaller, because while the proposed Actor uses a parameterized mean and standard deviation, more complex mechanisms are generally proposed in the prior art for the Critic, such as the parameterized mean and 3-layer neural nets of Masadeh, Z. Wang, and A. E. Kamal, as compared to the TD($\lambda$) algorithm consisting of only multiplications and additions thanks to the linear function approximation of a value function presented in the implementation of figure 5.

By way of example, there will now be presented a detailed algorithm illustrating an implementation of the methods of figures 3 to 5.

The state is composed of the State-of-Buffer (SoB) and State-of-Charge (SoC), which is presumed to reflect both incoming and outgoing data and energy.

**Table 3: Overview of variables defined in Algorithm 1**

| | |
|---|---|
| $t$ | Time |
| $\beta_x$ | Learning rates for Actor |
| $\alpha_x$ | Learning rates for Critic |
| $R(t)$ | Reward |
| $\gamma_x$ | Discount factor for future reward |
| $\lambda_x$ | Recency weight in the Temporal Difference algorithm |
| $\sigma_x$ | Exploration space (standard deviation for the policy based on the Gaussian distribution) |
| $\beta_1, \beta_2$ | Decay coefficients/Smoothing factors for exponentially weighted moving average (EWMA) in Adam Optimiser |
| $E(t)$ | Residual energy |
| $B(t)$ | Data buffer level |
| $\psi_x(t)$ | Actor Parameter |
| $\theta_x(t)$ | Critic Parameter |
| $z_x(t)$ | Eligibility trace (which keeps track of the gradients in the past using a trace-decay factor; therefore, it tends to retain the recent gradients with larger contribution to the update) |
| $g_x(t)$ | Gradients w.r.t. stochastic objective at time step t |
| $\delta_x(t)$ | Temporal Difference Error value |
| $\mu_x(1)$ | Mean value of the Gaussian policy |
| $m_x(t)$ | First order moment used to adapt the Actor parameter in the Adam optimiser |
| $v_x(t)$ | Second order moment used to adapt the Actor parameter in the Adam optimiser |

The following algorithm refers only to the State of Buffer and State of Charge for the state representation, thereby reducing the number of observations required for a complete understanding of system state, in contrast to approaches known in the prior art, for example as known from Masadeh, Wang, and Kamal, "An actor-critic reinforcement learning approach for energy harvesting communications systems," in 2019 28th International Conference on Computer Communication and Networks (ICCCN), pp. 1-6, July 2019, or A. Murad, F. A. Kraemer, K. Bach, and G. Taylor, "Autonomous management of energy-harvesting IoT nodes using deep reinforcement learning," in 2019 IEEE 13th International Conference on Self-Adaptive and Self-Organizing Systems (SASO), pp. 43-51, June 2019.

Table 4 provides the list of parameters that are manipulated by Algorithm 1. The notes column additionally incorporates references in parentheses associating respective operations with the corresponding steps in the method of figure 5.

**Table 4: detailed exemplary algorithm with explanatory notes**

| Require: | Notes |
|---|---|
| /*Inputs* / | |
| Residual energy E(t) $\in$ [E$_{fail}$, E$_{max}$] and data buffer level B(t) $\in$ [B$_{min}$, B$_{max}$] | |
| Agent x $\in$ {X} | For example, x = op for TX output power, x = dc for TX duty-cycle |
| **/*Hyper-parameters for Actor-Critic*/** | Hyper parameters are constant |
| Learning rates $\beta_x$ and $\alpha_x$ for Actor and Critic, respectively | |
| Discount factor $\gamma_x \in$ [0,1] for reward R(t) | |
| Recency weight $\lambda_x \in$ [0,1] in the TD($\lambda$) algorithm | |
| Exploration space $\sigma_x$ (standard deviation for the policy based on the Gaussian distribution) | |
| Smoothing/decay factors $\beta_1 \in$ [0,1] and $\beta_2 \in$ [0,1] for exponentially weighted moving average (EWMA) in Adam Optimiser | |
| **Ensure:** | |
| Action $a_x(t+1) \in$ [$a_x^{min}$, $a_x^{max}$] for agent x | The action value can be either continuous or discrete |
| Actor and Critic parameter $\psi_x(t)$ and $\theta_x(t)$ | |
| 1. Initialise at time t = 0; | Empty data buffer B(0) = 0 and fully-charged energy buffer E(0) = Emax |
| 2. For each t $\in$ [0, $\infty$] do | |
| /*Observe the current state*/ | |
| 3. $\phi_{SoB}(t)$ = B(t)/B$_{max}$ | (s411) Normalise current data queue level |
| 4. $\phi)_{SoC}(t)$=(E(t)-E$_{fail}$)/(E$_{max}$-E$_{fail}$) | (s411) Normalise current energy level |
| 5. Rx(t)=(1.0 - $\Phi_{SoB}(t-1)$) $\Phi_{SoC}(t-1)$ | (s412) Calculate the reward so as to minimising SoB and Maximising SoC |
| 6. V$_x$(t-1)= $\theta$x(t-1)·(1.0 - $\phi_{SoB}(t-1)$) $\phi)_{SoC}(t-1)$ | (s412) Less SoB and more SoC are better states |
| /*TD-error for Actor-Critic*/ | Calculate temporal-difference error |
| 7. $\delta_x(t)$= R$_x$(t) +$\gamma_x$ $\theta_X(t-1)$·(1.0 - $\phi_{SoB}(t-1)$) $\phi_{SoC}(t)$ - $\theta_X(t-1)$ (1.0 - $\phi_{SoB}(t-1)$) $\phi_{SoC}(t-1)$ | (s413) Advantage function : A(s,a) = Q(s,a) - V(s) where Q(s,a) is a state-action value function |
| **/*Critic: TD($\lambda$) algorithm*/** | Update the estimate of the value function |
| 8. $z_x(t)$=$\gamma_x\lambda_x z_x(t-1)$ + (1.0 - $\phi_{SoB}(t-1)$) $\phi)_{SoC}(t-1)$ | (s414) Calculate the eligibility trace $z_x(t)$ |
| 9. $\theta_x(t)$= $\theta_x(t-1)$ + $\alpha_x\delta_x(t) z_x(t)$ | (s414) Update the critic parameter |
| **/*Actor: Policy gradient theorem with adaptation - aware Adam optimiser*/** | Calculate the gradient first; then, according to the Adam algorithm, the gradient, or the learning rate is adjusted. |
| 8. $$g_x(t) = \delta_x(t) \frac{a_x(t-1)-\mu_x(t-1)}{\sigma_x^2} \phi_{SoB}(t-1) \phi_{SoC}(t-1)$$ | (s 515a) Estimate the gradient |

(continued)

| Require: | Notes |
|---|---|
| 11. $m_x(t) = \beta_1 \cdot m_x(t-1) + (1 - \beta_1) \cdot g_x(t)$ | (s 515b) Estimate the first-order moment (Adam) |
| 12. $v_x(t) = \beta_2 v_x(t-1) + (1 - \beta_2) \cdot g_x(t)^2$ | (s515b) Estimate the second-order moment (Adam) |
| 13. $\widehat{\beta_x}(t) = \beta_x \cdot \dfrac{\sqrt{1-\beta_2^t}}{1-\beta_1^t}$ | (s515c) Adapt the learning rate (Adam) |
| 14. $\psi_x(t) = \psi_x(t-1) + \widehat{\beta_x}(t) \cdot \dfrac{m_x}{\sqrt{v_x(t)+\xi}}$ | (s515d) Based on the adapted learning rate, the Actor parameter is updated (Adam) |
| **/*Next TX current selection*/** | The action is decided using the updated parameter |
| 15. $\mu_x(t) = \psi_x(t) \cdot \phi_{SoB}(t)\, \phi_{SoC}(t)$ | (s320) Less SoB, lower action values; more SoC, higher action values |
| 16. $a_x(t) \sim N(\mu_X(t), \sigma_x)$ | (s320) Gaussian policy for action generation |
| 17. $ax(t) \leftarrow$ Clamp $ax(t)$ to $[a_x^{min}, a_x^{max}]$ | (s320) |
| 18. **Return** $a_x(t)$ | |
| 19. **end for each** | |

It will be appreciated that the above algorithm incorporates numerous advantageous implementation details. For example the value function is assumed to be linearly proportional to the multiplication of 1 - $\phi_{SoB}$ and $\phi_{SoC}$ (line 6), which indicates that the value of the state is higher when a lower Buffer (SoB) and higher charge (SoC) are confirmed. Similarly, the linear relationship is also assumed between the mean action value and the multiplication of $\phi_{SoB}$ and $\phi_{SoC}$ (line 15), which means that lower action values (i.e., less performance) is enough when the SoB level is less, and higher values can be provided when the SoC level is higher. Furthermore, the final action is generated based on the Gaussian distribution (line 16) to guarantee explorations and to find an optimal action.

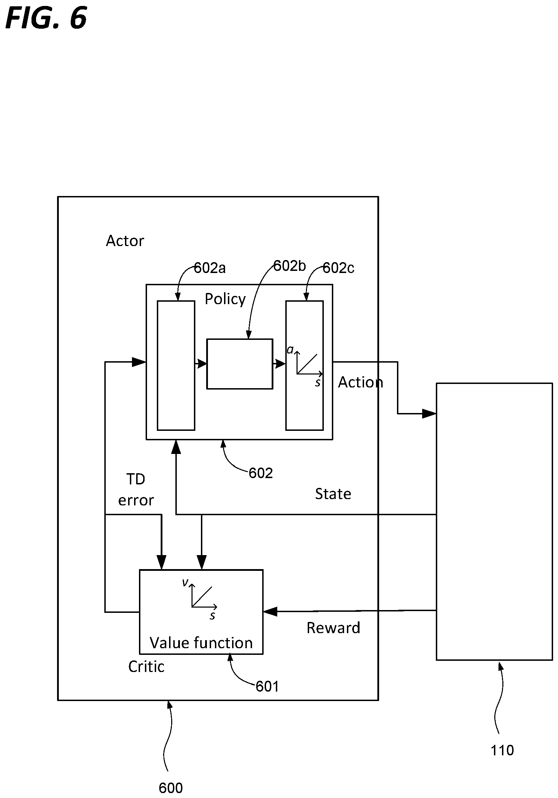

Figure 6 provides a representation of the Actor-Critic structure according to certain embodiments.

As shown in figure 6, the Actor-Critic model is based on the provision of two interacting models: Actor 602 and Critic 601. The Actor receives information concerning the state of the outside world 110, and on the basis of a learned policy, performs an action with respect to the outside world. Meanwhile, the Critic 601 also receives the same information concerning the state of the outside world 110, and based on defined objectives, evaluates whether things have gone better or worse. As shown, in accordance with the approach of table 4, the Actor implements a gradient estimate 602a for example as specified in line 10 of the algorithm of table 4. This feeds the ADAM calculation 602b as specified in lines 11 to 14 of the algorithm of table 4, which in turn drives the action computation defined in lines 15 to 18 of the algorithm of table 4. Meanwhile, the Critic operation is defined in lines 8 to 9 of the algorithm of table 4, with the transfer of the TD-error being defined in line 7 of the algorithm of table 4 and the reward being defined in line 5 of the algorithm of table 4.

Alternative embodiments may incorporate some or all of these features in any combination.

In the preceding pseudo code, each state parameter is associated with a respective agent. The algorithm operates to converge on a joint optimisation of these parameters. Any number of parameters may be used. In the following example, the case of joint optimization of transmission duty-cycle and output power in an energy-harvesting IoT sensor end-node communicating with a sink node is considered, however the skilled person will appreciate that the same approach may be applied in other contexts of controlling energy consuming operations in an electronic system in a closed loop mode. The skilled person will appreciate that this constitutes the application of a new algorithm to a particular technical purpose of managing the balance between energy resources and system performance.

By way of illustration, a specific scenario is now presented as a basis for simulations based on the exemplary algorithm set out in table 4.

In this exemplary application scenario, the following conditions are defined:

- The control update is conducted in every 30 minutes.
- A photovoltaic cell is used for the energy-harvesting. Real-life solar irradiance data are provided by Oak Ridge National Laboratory https://midcdmz.nrel.gov/apps/sitehome.pl?site=ORNL.
- The self-discharge of a supercapacitor (20% per day) is considered.

- The wireless link quality is under the influence of path-loss and shadowing.
- The workload follows the Poisson distribution. The average rate doubles up after the first 6 months (where the algorithm will be put through the test regarding fast adaptability/reactivity). More precisely, the system receives the average of 1.0 pkts/min for the first 6 months, and it impulsively becomes twice (2.0 pkts/min) afterwards.

The hyper-parameters for the Actor-Critic algorithm are shown in table 5. In table 5, x = op is related to the TX output power while x = dc is related to TX duty cycle. $\alpha_x$ and $\beta_x$ correspond to the Critic and Actor learning rates, respectively. $\gamma_x$ is the discount factor for the future reward. $\lambda_x$ is the recency weight in the TD algorithm. $\sigma_x$ is the exploration space (standard deviation for the policy based on the Gaussian distribution)

**Table 5: Hyper-parameter setups for study of adaptive learning rate**

| Agent $x$ | $\alpha_x$ | $\beta_x$ | $\gamma_x$ | $\lambda_x$ | $\sigma_x$ |
|---|---|---|---|---|---|
| TX output power | 0.1 | $1\times10^{-3}$ | 0.9 | 0.9 | $1\times10^{-3}$ |
| TX duty cycle | 0.1 | $3\times10^{-4}$ | 0.9 | 0.9 | $1\times10^{-3}$ |

To evaluate the convergence/reactivity speed, a comparison between conventional decay coefficient settings as defined in the prior art ($\beta_1$ = 0.9 and $\beta_2$ = 0.999) and adaptation-aware (0.5 for both) is made.

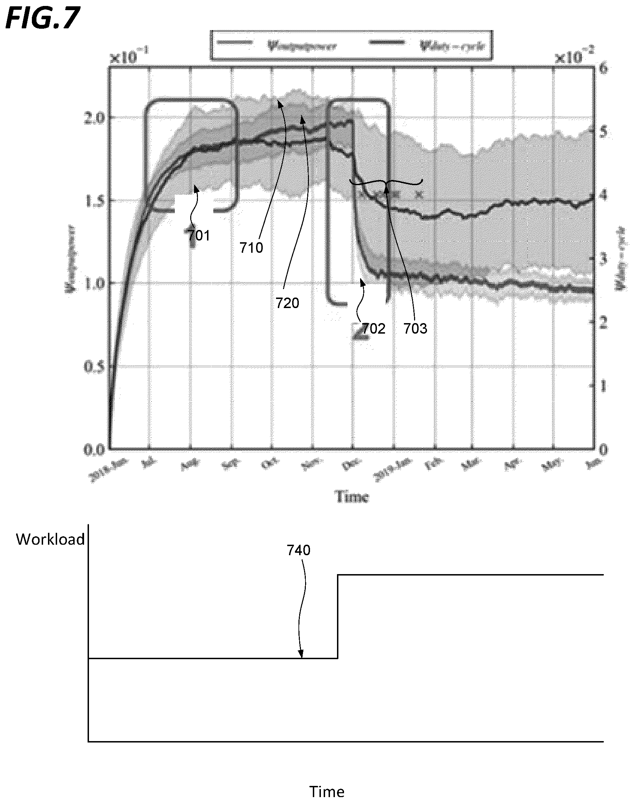

Figure 7 shows results for a simulation with conventional decay coefficient settings, the transitions of the state parameters corresponding to the actor parameters of the two agents respectively. A first line 710 plots the evolution of the Actor parameter value of the output power $\psi_{op}$ (no unit) over a one year simulation period, while the second line 720 plots the evolution of the Actor parameter value of the duty cycle $\psi_{dc}$ (no unit) over the same period. A separate set of axes with the same time axis represents the evaluation of the workload 740 over the simulation period. In particular, it may be seen that in this simulation the workload doubles after the first 6 months, i.e. in December.

Values are averaged over 92 cases. The conventional smoothing values as used in figure 7 lead to 8 cases of system failure 703.

Functioning with the fine-tuned parameters is visible in area 701. The reactivity to changes in workload is visible in area 702, corresponding to the period immediately after the change in workload defined by line 740.

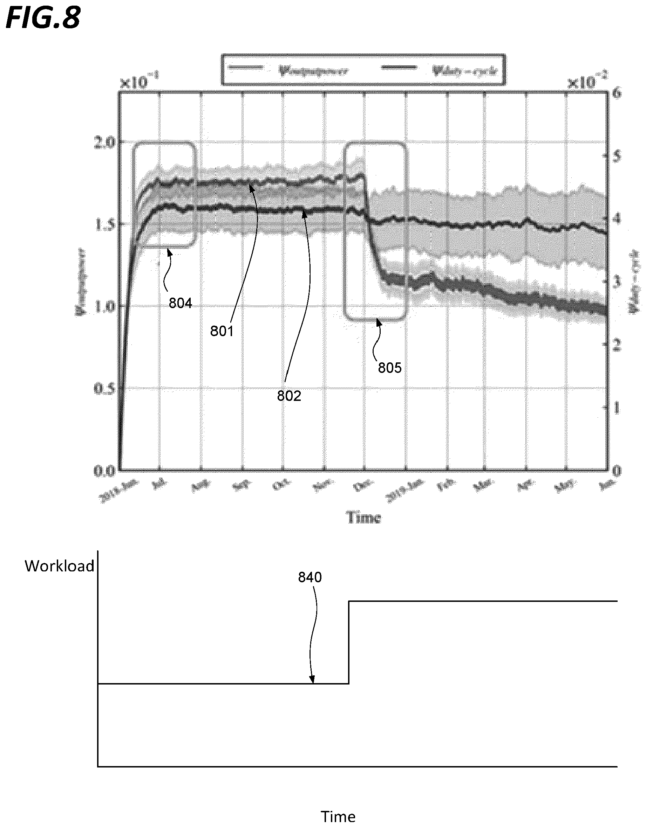

Figure 8 shows results for a simulation with reduced decay coefficient settings, the transitions of the state parameters corresponding to the actor parameters of the two agents respectively.

Figure 8 presents simulated results based on an embodiment with reduced decay coefficient settings. A first line 810 plots the evolution of the actor parameter of the output power $\psi_{op}$ (no unit) over a one year simulation period, while the second line 820 plots the evolution of the actor parameter of the duty cycle $\psi_{dc}$ (no unit) over the same period. A separate set of axes with the same time axis represents the evaluation of the workload (in pkts/min) 840 over the simulation period. In particular, it may be seen that in this simulation the workload doubles after the first 6 months, i.e. in December.

Values are averaged over 98 cases. The approach as shown in figure 8 exhibits no cases of system failure.

Functioning with the fine-tuned parameters is visible in area 804. The reactivity to changes in workload is visible in area 805, corresponding to the period immediately after the change in workload defined by line 840. As can be seen in comparison to figure 7, with all other factors identical, the reduction of the decay coefficient settings from conventional values as defined in the prior art of $\beta_1$ = 0.9 and $\beta_2$ = 0.999 to 0.5 for both brings about a marked increase in the speed with which the application converges on optimized output power and duty cycle values, on start-up and in reaction to a change in conditions.

While the example of figure 8 adopts values of the decay coefficient settings of 0.5, it will be appreciated that the optimal values will depend on other implementation details, and may be fixed on a case by case basis. Nevertheless, values less than the conventional values of $\beta_1$ = 0.9 and $\beta_2$ = 0.999 will generally be preferred, and in many cases will be below 0.5.

The skilled person will appreciate that while figures 7 and 8 are based on the detailed algorithm of table 4, these considerations concerning decay coefficient settings may be extended to any approach with corresponding tuning values, and in particular to any algorithm incorporating an exponentially weighted moving average (EWMA). Speed is also improved by the lower values of smoothing factors. As discussed already, the large decay coefficients in EWMA lead to slow adaptation to the changes. The decaying factor can also be viewed as a smoothing factor since the control update is done in every 30 minutes, so that the gradient fluctuation carries important information for the update, too much smoothing as in the value of 0.9 gives rise to the slow convergence. As a consequence, system failure occurred in the default setting.

While no system failure was observed with the settings of figure 8, a small degree of data overflow was observed in one case.

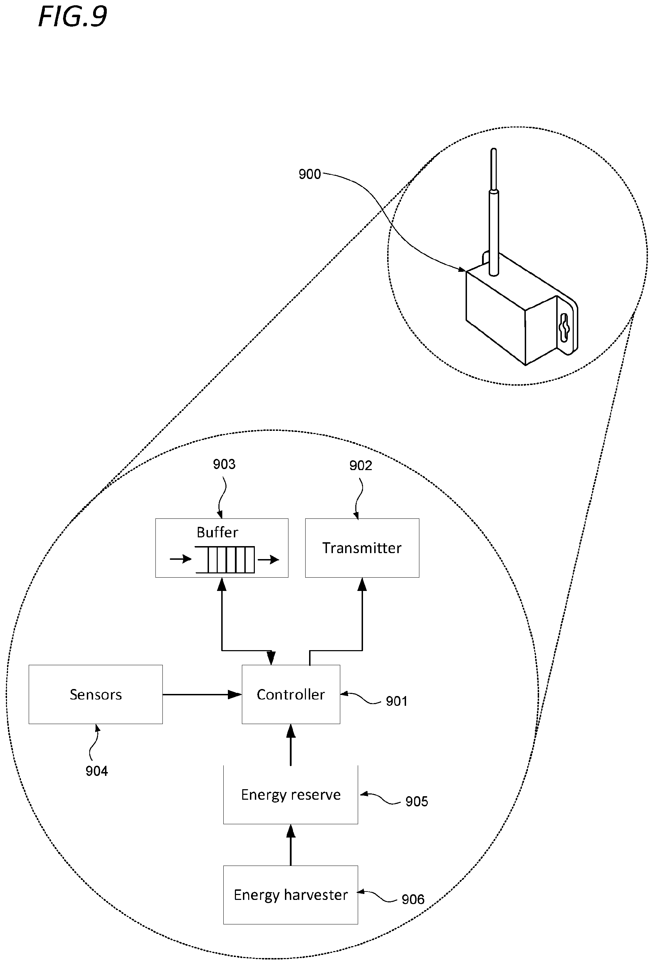

Figure 9 shows a controller of energy consuming operations in an electronic system in a closed loop mode in accordance with an embodiment.

As shown in figure 9 there is provided a controller 901. The controller is shown by way of example as being in communication with a transmitter 902, the transmission operations of which may, in certain embodiments, constitute energy consuming operations in the sense of the present invention. The controller is further shown by way of example as being in communication with a transmitter transmission buffer 903, the instantaneous fill level of which may by way of example constitute a performance parameter in the sense of the present invention. The buffer may be used to store data received from one or more sensors 904, while awaiting their turn for transmission by the transmitter 902. As shown, there is further provided an energy reserve 905, which may be provided with energy by an energy harvester 906. The energy reserve provides energy to enable the operations of the transmitter, and optionally the other elements of the system. The instantaneous charge level of the energy reserve 905 may by way of example constitute a performance parameter in the sense of the present invention. As such, the elements 901 to 906 constitute an electronic system 900, which as illustrated may constitute a typical "Internet of Things" device.

In accordance with the embodiment, the controller 901 is configured to apply a linear function approximation based Actor-Critic Reinforcement Learning algorithm for example as discussed above to a set of state parameters. One of these state parameters is an energy resource state of the electronic system, which may comprise the charge level of the energy reserve 905 in line with the preceding discussion. Another of these is a performance parameter of said energy consuming operation, which may comprise the instantaneous fill level of the buffer 903 in line with the preceding discussion.

The Reinforcement Learning algorithm incorporates an adaptive learning rate algorithm serving to mitigate fluctuations in the gradient of said state parameters, for example as discussed above. The controller is being further adapted to define an output parameter specifying a system operation concordant with said performance requirement subject to said mitigation of fluctuations. In the context of the embodiment of figure 9, the system operation may comprise instructing a transmit operation of the transmitter 902, or, equivalently, setting a duty cycle for transmit operations as presented in the foregoing examples.

The skilled person will appreciate that while the arrangement of figure 9 is presented as a stand-alone device, it may equally be integrated in or associated with a larger system. The skilled person will similarly appreciate that while the arrangement of figure 9 is described in the context of managing transmission operations, many other energy consuming operations may be envisaged for electronic systems comprising a controller as described, for example as mentioned above.

The skilled person will appreciate that the various concepts described with respect to figures 3 to 9 may be freely combined. For example, the system of figure 9, or the algorithms of figures 4 or 5 may be adapted to any of the different application contexts described in the context of figure 3, while any of the implementation details, as mentioned for example with respect to figures 4 or 5, may be incorporated individually or in any combination in the other arrangements presented herein. Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 3 to 5. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

For example, the controller may comprise one or more physical logic devices configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result, in particular to implement certain of the operations described above, for example with reference to figure 3 to 8.

Such logic devices may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device optionally may be distributed among two or more separate devices, which may be remotely located and/or configured for coordinated processing. Aspects of the logic device may be virtualized and executed by remotely accessible, networked computing devices configured in a cloud-computing configuration.

The controller may additionally comprise or have access to one or more storage devices, which may include one or more physical devices configured to hold instructions executable by the logic device to implement the methods and processes described herein. When such methods and processes are implemented, the state of a storage device may be transformed - e.g., to hold different data.

A storage device may include removable and/or built-in devices. Storage device may be locally or remotely stored (in a cloud for instance). Storage device 903 may comprise one or more types of storage device including semiconductor memory (e.g., FLASH, RAM, EPROM, EEPROM, etc.), and/or magnetic memory (e.g., MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface adapted to support communications between the logic device and further system components.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 901 and storage device 903 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by a specific storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 9 may be used to implement embodiments of the invention. Some or all of the functions of the above embodiments may be implemented by the way of suitable instructions stored in a specific storage device and executed by a logic device. The storage device and logic device may constitute together the controller 901 when suitably configured. Instructions implementing this configuration may be stored partially or wholly in the storage device and/or any of the other storage components as described herein. The buffer 903 may be defined in the storage device. Accordingly, the invention may be embodied in the form of a computer program.

A controller such as that of figure 9 may be configured or adapted to implement any of the operations described above for example with reference to figures 3 to 8 as required.

As shown, there may be provided an electronic device comprising an energy resource and an output transducer, and a controller as described with reference to figure 9.

Accordingly, in certain embodiments a lightweight Learning mechanism combining a linear function approximation based Reinforced Learning and an adaptive learning rate method is provided for energy management of Internet of Things (IoT) nodes and other energy constrained electrical systems, especially for nodes with harvested energy and wireless transmitters. The adaptive learning rate method may be based on an exponentially weighted moving average (EWMA), or Adam, which incorporate EWMA. Optimal decay coefficient ranges outside the usual range in Neural Network contexts have been found to be effective in implementations based on this linear function approach.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

Table of abbreviations

| RL | Reinforcement Learning |
|---|---|
| DRL | Deep Reinforcement Learning |
| CSI | Channel State Information |
| SoB | State-of-Buffer |

(continued)

| SoC | State-of-Charge |
|------|------|
| IoT | Internet of Things |
| DDPG | Deep Deterministic Policy Gradient |
| DDQN | Double Deep Q-network |
| EWMA | Exponentially Weighted Moving Average |
| PID | Proportional-Integral-Derivative |
| MPC | Model Predictive Control |
| TX | transmission |
| RX | Reception |
| MDP | Markov Decision Process |
| TD | Temporal Difference |

**Claims**

1. A controller of energy consuming operations in an energy constrained electronic system in a closed loop mode, said controller adapted to apply a linear function approximation based Actor-Critic Reinforcement Learning algorithm to a set of state parameters comprising
an energy resource state of said electronic system and
one or more performance parameters of said energy consuming operation,
wherein a trade off between said energy resource state on one hand and said performance parameters on the other is inherent to the operation of said electronic system,
wherein said Reinforcement Learning algorithm incorporates an adaptive learning rate algorithm serving to mitigate fluctuations in the gradient of said state parameters, said controller being further adapted to define an output parameter specifying a system operation concordant with said performance requirement subject to said mitigation of fluctuations, wherein there exists a predictable monotonic relationship between said system operation and said energy resource state reflected in said linear function approximation.

2. An electronic device comprising an energy resource and an output transducer, and a controller according to claim 1.

3. A method of controlling energy consuming operations in an energy constrained electronic system in a closed loop mode, said method comprising the steps of:

applying a linear function approximation based actor critic Reinforcement Learning algorithm to a set of state parameters comprising
an energy resource state of said electronic system and
one or more performance parameters of said energy consuming operation,
wherein a trade off between said energy resource state on one hand and said performance parameters on the other is inherent to the operation of said electronic system,
wherein said Reinforcement Learning algorithm incorporates an adaptive learning rate algorithm serving to mitigate fluctuations in the gradient of said state parameters, said method comprising the further step of defining an output parameter specifying a system operation concordant with optimizing said state parameters subject to said mitigation of fluctuations, wherein there exists a monotonic relationship between said system operation and said energy resource state reflected in said linear function approximation.

4. The method of claim 3 wherein the adaptive learning rate is implemented using the Adam algorithm.

5. The method of any of claims 3 or 4 wherein the adaptive learning rate is implemented using the rmsprop algorithm.

6. The method of any of claims 3 to 5 wherein the adaptive learning rate is implemented using the Adadelta algorithm.

7. The method of claim 5 or 6 wherein the first order decay coefficient ($\beta_1$) of the rmsprop algorithm or Adam Algorithm is less than 0.9 and the second order decay coefficient ($\beta2$) is less than (and $\beta_2$=0.999).

8. The method of any of claims 3 to 7 wherein said energy consuming operations comprise the transmission of data, said one or more performance parameters include a data buffer level, and said system operation is the transmission of a specified part of the content of the data buffer to which said data buffer level relates.

9. The method of claim 8 wherein said energy consuming operations comprise the wireless transmission of data.

10. The method of claim 9 wherein said performance parameters further include a transmission channel quality indicator.

11. The method of any of claims 3 to 7 wherein said energy consuming operations comprise actuator operations of a mechanical system calculated to cause said mechanical system to maintain or assume a particular orientation, configuration, or attitude in a physical frame of reference.

12. The method of any of claims 3 to 11 wherein said energy resource state reflects the charge level of a battery or super capacitor.

13. The method of claim 12 wherein the charge level of a battery or super capacitor is dependent on energy gleaned from a variable source.

14. The method of claim 8 wherein said variable source is solar energy.

15. A computer program comprising instructions which, when the program is executed by a computer, cause the computer to carry out the method of any preceding claim.

# FIG. 1

## FIG. 2

# FIG. 3

# FIG.4

# FIG.5

# FIG. 6

Actor

602a    602b    602c

Policy

*a*

*s*    Action

602

TD
error

State

Value function

*v*

*s*

Reward

Critic

601

600

110

**FIG.7**

## FIG.8

# FIG.9

Europäisches
Patentamt

European
Patent Office

Office européen
des brevets

# EUROPEAN SEARCH REPORT

Application Number

EP 20 30 6518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NAGESHRAO S P ET AL: "Passivity-based reinforcement learning control of a 2-DOF manipulator arm", MECHATRONICS, PERGAMON PRESS, OXFORD, GB, vol. 24, no. 8, 15 November 2014 (2014-11-15), pages 1001-1007, XP029101436, ISSN: 0957-4158, DOI: 10.1016/J.MECHATRONICS.2014.10.005 * sections 2.2 and 2.5 * * Equations (4) and (6) * | 1-15 | INV. G06N3/0454 G06N3/08 |
| Y | MAHMOUD M. S. ET AL: "Reinforcement learning control approach for autonomous microgrids", INTERNATIONAL JOURNAL OF MODELLING AND SIMULATION., vol. 41, no. 1, 20 August 2019 (2019-08-20), pages 1-10, XP055806363, XX ISSN: 0228-6203, DOI: 10.1080/02286203.2019.1655701 Retrieved from the Internet: URL:https://www.tandfonline.com/doi/pdf/10.1080/02286203.2019.1655701?needAccess=true> * sections 1 and 3 * | 1-15 | |
| Y | JUNTANG ZHUANG ET AL: "AdaBelief Optimizer: Adapting Stepsizes by the Belief in Observed Gradients", ARXIV.ORG, CORNELL UNIVERSITY LIBRARY, 201 OLIN LIBRARY CORNELL UNIVERSITY ITHACA, NY 14853, 22 November 2020 (2020-11-22), XP081819867, * section 1 * * page 4 penultimate paragraph * | 7 | |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| Munich | 21 May 2021 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- WO 2020004972 A
- CN 102958109
- CN 109217306

**Non-patent literature cited in the description**

- **MASADEH, Z. WANG ; A. E. KAMAL.** An actor-critic reinforcement learning approach for energy harvesting communications systems. *2019 28th International Conference on Computer Communication and Networks (ICCCN),* July 2019, 1-6
- **C. QIU ; Y. HU ; Y. CHEN ; B. ZENG.** Deep Deterministic Policy Gradient (DDPG)-based energy harvesting wireless communications. *IEEE Internet of Things Journal,* October 2019, vol. 6, 8577-8588
- **N. ZHAO ; Y. LIANG ; D. NIYATO ; Y. PEI ; Y. JIANG.** Deep reinforcement learning for user association and resource allocation in heterogeneous networks. *2018 IEEE Global Communications Conference (GLOBE-COM),* December 2018, 1-6
- **S. SAWAGUCHI et al.** Multi-agent actor-critic method for joint duty-cycle and transmission power control. *Design, Automation Test in Europe Conference (DATE) 2020,* March 2020
- **D. KINGMA ; J. BA.** Adam: A method for stochastic optimization. *3rd International Conference for Learning Representations,* 2015
- **S. RUDER.** An overview of gradient descent optimization algorithms. *Computing Research Repository,* 2016
- **MASADEH ; WANG ; KAMAL.** An actor-critic reinforcement learning approach for energy harvesting communications systems. *2019 28th International Conference on Computer Communication and Networks (ICCCN),* July 2019, 1-6
- **A. MURAD ; F. A. KRAEMER ; K. BACH ; G. TAYLOR.** Autonomous management of energy-harvesting IoT nodes using deep reinforcement learning. *2019 IEEE 13th International Conference on Self-Adaptive and Self-Organizing Systems (SASO),* June 2019, 43-51